# EUROPEAN PATENT APPLICATION

(11) **EP 2 485 372 A2**
(43) Date of publication of application: **08.08.2012**
(21) Application number: 12153528.0
(22) Date of filing: 01.02.2012
(51) Int. Cl.: H02K 3/02, H01B 1/02, H01B 13/00

(54) **Conductive component and method for treating the conductive component**

(30) Priority: 04.02.2011 US 201113020934
(71) Applicant: General Electric Company, Schenectady, NY 12345 (US)
(72) Inventor: Witney, Andrew Batton, Schenectady, NY New York 12345 (US)
(74) Representative: Szary, Anne Catherine

(57) **Abstract**

A conductive component (50) and a method for treating the conductive component (50) to modify conduction through the component (50) are disclosed. The method includes heating the component (50) such that annealing of an exterior layer (54) of the component (50) occurs without annealing of an interior layer (52) of the component (50), wherein the interior layer (52) is disposed adjacent to and integral with the exterior layer (54). The method further includes cooling the component (50) such that annealing of the exterior layer (54) ceases without annealing of the interior layer (52). The component (50) includes an annealed exterior layer (54) having a thickness (58) of less than or equal to approximately 10 millimeters, and a non-annealed interior layer (52) disposed adjacent to and integral with the exterior layer (54).

## Description

The present disclosure relates in general to conductive components. More specifically, the present disclosure relates to methods for treating conductive components to modify conduction through the components and conductive components with modified conduction characteristics.

### BACKGROUND OF THE INVENTION

Turbine systems are widely utilized in fields such as power generation. For example, a conventional gas turbine system includes a compressor, a combustor, and a turbine connected to a generator. The mechanical energy produced by the compressor, combustor and turbine is transferred to the generator. The generator then converts the mechanical energy to electrical energy that may be deployed to a utility grid.

Various components of the generator, and specifically of the generator stator, may be formed from electrically conductive materials. Frequently, for example, the components are formed from copper. Alternating current ("AC") electricity is transmitted through these components in the stator.

These conductive materials, when untreated, may be poor conductors. For example, hard copper is a relatively strong material, but is a poor conductor when compared to, for example, soft copper. However, when the conductive materials are treated such that they are better conductors, the materials lose their strength. This may be detrimental to the operation of the generator. For example, the components formed from these treated materials may need to support their own weight and endure fatigue loading. Thus, when the components are treated, the use of additional materials or other reinforcing materials may be required to support the components, which are expensive, heavy, and inefficient.

Thus, an improved conductive component and an improved method for treating the conductive component are desired in the art. For example, a conductive component and a method for treating the conductive component that improve the conductive capacity of the component while preventing significant losses in the strength of the component would be advantageous.

### BRIEF DESCRIPTION OF THE INVENTION

Aspects and advantages of the invention will be set forth in part in the following description, or may be obvious from the description, or may be learned through practice of the invention.

In one embodiment, a method for treating a conductive component to modify conduction through the component is disclosed. The method includes heating the component such that annealing of an exterior layer of the component occurs without annealing of an interior layer of the component, wherein the interior layer is disposed adjacent to and integral with the exterior layer. The method further includes cooling the component such that annealing of the exterior layer ceases without annealing of the interior layer.

In another embodiment, a conductive component is disclosed. The component includes an annealed exterior layer having a thickness of less than or equal to approximately 10 millimeters, and a non-annealed interior layer disposed adjacent to and integral with the exterior layer.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 is a schematic illustration of a gas turbine system;

FIG. 2 is a perspective view of a stator of a generator according to one embodiment of the present disclosure;

FIG. 3 is a cross-sectional view of a conductive component after treating according to one embodiment of the present disclosure; and

FIG. 4 is a cross-section al view of a conductive component after treating according to another embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

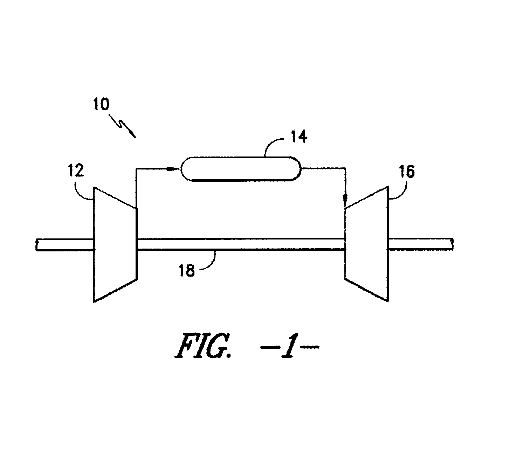

FIG. 1 is a schematic diagram of a gas turbine system 10. The system 10 may include a compressor 12, a combustor 14, and a turbine 16. Further, the system 10 may include a plurality of compressors 12, combustors 14, and turbines 16. The compressors 12 and turbines 16 may be coupled by a shaft 18. The shaft 18 may be a single shaft or a plurality of shaft segments coupled together to form shaft 18. Various other systems, such as steam turbine systems, may be connected to the gas turbine system 10. Further, it should be understood that the present disclosure is not limited to gas turbine systems 10, and rather that any suitable gas, steam, or other turbine system is within the scope and spirit of the present disclosure.

The system 10 may further include a generator 20. The generator 20 may accept mechanical energy developed by the other components of the system 10 and convert this energy into electrical energy. For example, the generator 20 may include a rotor (not shown) and a stator 22. As is known in the art, the rotor is a generally movable component of the generator 20, while the stator 22 is a generally stationary component of the generator 22.

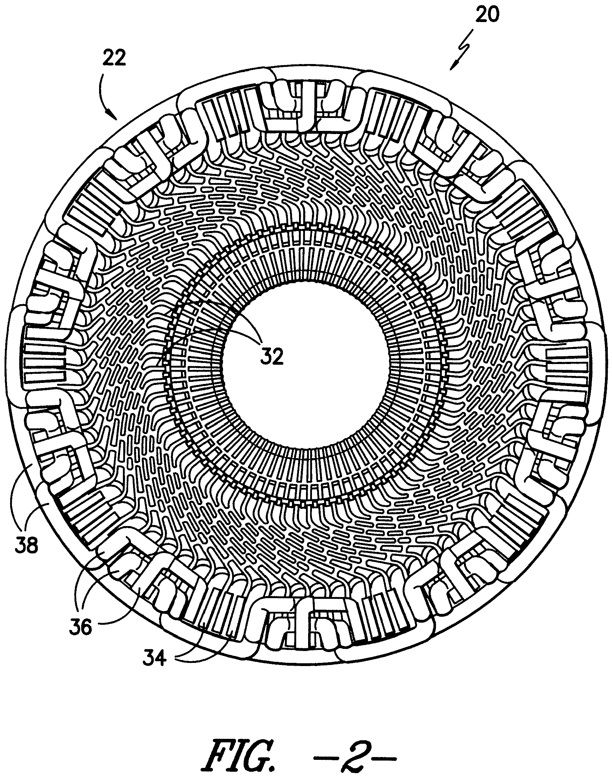

As shown in FIG. 2, the stator 22 may include a variety of conductive components. These conductive components may conduct electricity, such as AC electricity, therethrough, and provide this electricity to, for example, a utility grid. For example, an array of stator bars 32 may conduct electricity therethrough. Each stator bar 32 may be formed from a plurality of conductive strands, such as copper strands. Various of the stator bars 32 may be connected by series connectors 34 to form series connections therebetween. Additional connections may be formed through the connection of, for example, phase connectors 36. The phase connectors 36 may be connected to the stator bars 32 and/or series connectors 34 to provide additional connections, such as connections between various phases of AC electricity that may be produced by the generator 20. For example, in exemplary embodiments, the generator 20 may produce three phases of AC electricity. The phase connectors 36 may be utilized to provide connections between these phases.

The bars 32, series connectors 34, and/or the phase connectors 36 may be connected to a connection ring 38 or connection rings 38. The connection rings 38 may be generally annular or arcuate components that are disposed at an end of the stator 22. Electricity may be flowed through the connection rings 38 out of the generator 20 and to a utility grid or other suitable location. For example, the connections rings 38 may be connected by various bars or components (not shown) to high-voltage bushings (not shown). The high-voltage bushings may extract the electricity from the generator 20.

It should be understood that the above described conductive components of generator 20 are merely various components of one embodiment of a generator, and that any suitable generator and arrangement of components therein is within the scope and spirit of the present disclosure.

As described above, various components of the generator 20 are conductive components configured to conduct electricity, such as AC electricity, therethrough. Previously, the components utilized in generators were generally formed from either untreated materials that were relatively strong but relatively bad conductors, or treated materials that were relative good conductors but relatively weak.

Thus, the present disclosure is further directed to an improved method for treating a conductive component 50, such as a conductive component utilized in a generator 20, to modify, such as improve, conduction through the component 50, and to an improved conductive component 50. In exemplary embodiments, these components are treated such that the resulting treated components are both relatively good conductors and relatively strong. It should be understood that while the present disclosure discusses the benefits of the improved method and component in the context of a generator 20 and system 10, the present disclosure is not limited to the use of the component, or the method for treating the component, in a generator 20. Rather, any suitable component alone or utilized in any suitable device or process is within the scope and spirit of the present disclosure.

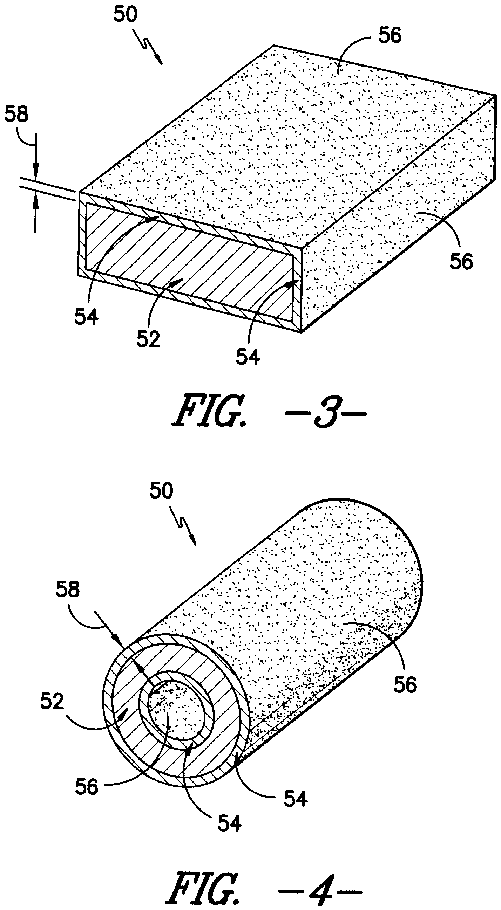

FIGS. 3 and 4 illustrate various embodiments of the component 50 of the present disclosure. In exemplary embodiments, the component 50 may be formed from copper or a copper alloy. In particular, in some embodiments the component 50 may be formed from tough pitch copper, while in other embodiments, the component 50 may be formed from oxygen free copper. In alternative embodiments, however, the component 50 may be formed from aluminum or an aluminum alloy, silver or a silver alloy, or any other suitable metal, metal alloy, or other suitable material.

In exemplary embodiments, the component 50 may be a component of a generator 20, as discussed above. For example, the component 50 may be a stator bar 32, a series connector 34, a phase connector 36, a connection ring 38, a high-voltage bushing, or any other suitable component of the generator 20.

The component 50 of the present disclosure includes an interior layer 52 or a plurality of interior layers 52, and an exterior layer 54 or a plurality of exterior layers 54. The interior layer 52 may be adjacent to and integral with the exterior layer 54. Exterior layer 54 may defme an exterior surface 56 or exterior surfaces 56 of the component 50.

For example, in some embodiments, as shown in FIG. 3, the component 50 may be a solid bar. In other embodiments, as shown in FIG. 4, the component 50 may be a hollow tube. The component 50 may have a plurality of exterior layers 54. For example, a plurality of exterior layers 54 generally encompass the entire exterior of the component 50 or various portions thereof. With regard to the solid bar embodiment as shown in FIG. 3, each of the outer surfaces may be an exterior surface 56 defined by an exterior layer 54. With regard to the hollow tube embodiment as shown in FIG. 4, for example, the inner surface and the outer surface, as well as the edge surfaces, may be exterior surfaces 56 defined by exterior layers 54.

It should be understood that the component 50 according to the present disclosure is not limited to solid bars and hollow tubes as disclosed above. Rather, any suitably shaped component having any suitable size is within the scope of the present disclosure.

As discussed above, interior layer 52 and exterior layer 54 may be integral portions of the component 50. In other words, the interior layer 52 and exterior layer 54 are merely portions of the material forming the component 50. Thus, before treating the component according to the present method, interior layer 52 and exterior layer 54 may be indistinguishable. During and after treating of the component according to the present method, however, various or all of the interior layers 52 and exterior layers 54 may be distinguishable from each other, as discussed below. Treating of the component according to the present method may thus treat an exterior layer or layer 54 through annealing, while preventing annealing of the interior layer or layers 52. After treatment, the exterior layer or layer 54 may be annealed, while the associated interior layers 52 may remain not annealed.

To treat the conductive component 50 in order to produce a treated conductive component as discussed above, the present method is disclosed. The method includes, for example, heating the component 50 such that annealing of an exterior layer 54 or plurality of exterior layers 54 occurs. In general, annealing occurs when recrystallization of the material begins to occur. This is based on the material being annealed, the temperature at which the material is being heated, the time during which the material is being heated, along with other variables as is generally known in the annealing art. Annealing of exterior layers 54 may distinguish and form annealed exterior layers 54. For example, annealing may begin at the exterior surfaces 56 and extend inward, gradually annealing the exterior layers 54. Further, this heating to cause annealing may occur without annealing of the interior layer 52. Thus, heating of the component 50 as discussed may be stopped before the interior layer 52 begins annealing. In general, the interior layer 52 is defined by the annealing of exterior layer 54, such that the interior layer 52 begins where annealing has not occurred.

The method further includes cooling the component 50, such as cooling the component 50 after heating of the component 50. Cooling according to the present disclosure may occur such that annealing of the exterior layer 54 ceases without annealing of the interior layer 52. Thus, according to the present disclosure, only exterior layer 54 is annealed, while interior layer 52 is not annealed.

By annealing the exterior layer 54 and not annealing the interior layer 52, the present method may produce a conductive component 50 that is a relatively good conductor and is relatively strong. For example, annealing of the exterior layer 54 may cause the exterior layer 54 to have better conductive properties, while not annealing the interior layer 52 may allow the interior layer 52 to maintain the strength properties of the material utilized for the conductive component 50.

The conductive component 50 produced according to the present method may be particularly advantageous with regard to the conduction of AC electricity through the component 50. AC electricity generally flows primarily through the outer skin or outer layer of a conductive material. The density of the AC current, and thus the amount of AC electricity, is reduced exponentially with respect to distance from the surface of the material. Thus, the component 50 according to the present disclosure advantageously allows the majority of AC electricity flowing through the component 50, which is flowing through exterior layer or layers 54, to be better conducted through the component 50 due to annealing of the component. Further, the strength of the component 50 is advantageously maintained in the portion of the component 50 through which only a minimal portion of the AC electricity is flowed by not annealing the interior layer or layers 52.

In exemplary embodiments, heating of the component 50 may comprise induction heating of the component 50. In some exemplary embodiments, the heating step may be performed at a frequency of greater than or equal to approximately 100 kHz. In other exemplary embodiments, the heating step may be performed at a frequency in the range between approximately 100 kHz and approximately 400 kHz. It should be understood, however, that the present disclosure is not limited to the above disclosed frequencies, and rather that any suitable frequency is within the scope and spirit of the present disclosure.

Further, it should be understood that the present disclosure is not limited to induction heating. Rather, any suitable heating method that will anneal the component 50 as required is within the scope of the present disclosure.

In some embodiments, the cooling step may comprise quenching. Additionally or alternatively, the cooling step may comprise air cooling, oven cooling, or any other suitable cooling technique. Further, it should be understood that the present disclosure is not limited to any of the above disclosed cooling techniques, and rather that any suitable technique for suitably cooling the component 50 after annealing is within the scope and spirit of the present disclosure.

In some embodiments, the heating step and the cooling step of the present disclosure may produce a full anneal of the exterior layer. Alternatively, the heating step and the cooling step may produce an intermediate anneal, or any other suitable anneal. It should be understood that the present disclosure is not limited to any of the above disclosed types of anneals, and rather that any suitable anneal type is within the scope and spirit of the present disclosure.

As discussed above, the method and the conductive component 50 according to the present disclosure may allow AC electricity to better flow through exterior layer 54 while maintaining the strength of interior layer 52. The exterior layer 54 may have a thickness 58. In exemplary embodiments, this thickness 58 may desirably be minimized. For example, the thickness 58 of the exterior layer 54 may, in some embodiments, be less than or equal to approximately 10 millimeters, or less than or equal to approximately 9 millimeters, or less than or equal to approximately 5 millimeters, or less than or equal to approximately 4 millimeters.

The interior layers 52 and exterior layers 54 of conductive component 50, after cooling according to the present method, may further have varying hardnesses. In general, the hardness of an annealed exterior layer 54 may be less than the hardness of a non-annealed interior layer 52. For example, in some embodiments, after cooling, the exterior layer 54 may have a hardness of less than approximately 50 on a Rockwell F scale. The interior layer 52 may have a hardness in the range between approximately 80 and approximately 100 of the Rockwell F scale. It should be understood, however, that the present disclosure is not limited to the above disclosed hardnesses, and rather that any suitable hardnesses are within the scope and spirit of the present disclosure.

As discussed, annealing of the exterior layer or layers 54 may increase the electrical conductivity of the layer of layers 54. For example, component 50 before being treated according to the present disclosure may have an electrical conductivity in the range between approximately 97% and 98% on the international annealed copper standard scale. After cooling, the exterior layer 54 may have an electrical conductivity of greater than or equal to approximately 10 1 % on the international annealed copper standard scale. It should be understood, however, that the present disclosure is not limited to the above disclosed electrical conductivities, either before or after treatment of the component 50 according to the present disclosure, and rather that any suitable electrical conductivities are within the scope and spirit of the present disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for treating a conductive component (50) to modify conduction through the component (50), the method comprising:
heating the component (50) such that annealing of an exterior layer (54) of the component (50) occurs without annealing of an interior layer (52) of the component (50), wherein the interior layer (52) is disposed adjacent to and integral with the exterior layer (54); and
cooling the component (50) such that annealing of the exterior layer (54) ceases without annealing of the interior layer (52).

2. The method of claim 1, wherein the heating comprises induction heating.

3. The method of claim 2, wherein the heating is performed at a frequency of greater than or equal to approximately 100 kHz.

4. The method of any of claims 1-3, wherein the cooling comprises quenching.

5. The method of any of claims 1-4, wherein the heating and the cooling produce a full anneal of the exterior layer (54).

6. The method of any of claims 1-5, wherein the conductive component (50) is formed from copper.

7. The method of any of claims 1-6, wherein after cooling the exterior layer (54) has a thickness (58) of less than or equal to approximately 10 millimeters.

8. The method of any of claims 1-7, wherein after cooling the exterior layer (54) has a hardness of less than approximately 50 on a Rockwell F scale and the interior layer (52) has a hardness in the range between approximately 80 and approximately 100 on the Rockwell F scale.

9. The method of any of claims 1-8, wherein after cooling the exterior layer (54) has an electrical conductivity of greater than or equal to approximately 101% on the international annealed copper standard scale.

10. A conductive component (50) comprising:
an annealed exterior layer (54) having a thickness (58) of less than or equal to approximately 10 millimeters; and
a non-annealed interior layer (52) disposed adjacent to and integral with the exterior layer (54).

11. The conductive component (50) of claim 10, wherein the conductive component (50) is formed from copper.

12. The conductive component (50) of any of claims 10-11, wherein the exterior layer (54) has a hardness of less than approximately 50 on a Rockwell F scale and the interior layer (52) has a hardness in the range between approximately 80 and approximately 100 on the Rockwell F scale.

13. The conductive component (50) of any of claims 10-12, wherein the exterior layer (54) has an electrical conductivity of greater than or equal to approximately 101 % on the international annealed copper standard scale.

14. The conductive component (50) of any of claims 10-13, further comprising a plurality of annealed exterior layers (54).

15. A generator (20) for a turbine system (10), comprising:
a stator (22), the stator (22) comprising the conductive component (50) of any of claims 10 to 14.
